# EUROPÄISCHE PATENTSCHRIFT

(11) **EP 2 145 781 B1**
(45) Veröffentlichungstag und Bekanntmachung des Hinweises auf die Patenterteilung: **09.09.2015**
(21) Anmeldenummer: 09009360.0
(22) Anmeldetag: 18.07.2009
(51) Int. Cl.: B60G 15/06, B60G 17/015, B60G 17/019, B60G 17/02, G01S 17/08, G01B 9/02, G01B 11/14

(54) **Kraftfahrzeug mit aktiver Federung**
Motor vehicle with active suspension
Véhicule automobile doté d'une suspension active

(30) Priorität: 19.07.2008 DE 102008033820
(43) Veröffentlichungstag der Anmeldung: 20.01.2010
(73) Patentinhaber: AUDI AG, 85045 Ingolstadt (DE)
(72) Erfinder: Meitinger, Karl-Heinz, 83308 Trostberg (DE); Michel, Wilfried, 93339 Riedenburg (DE)
(74) Vertreter: Patzelt, Heike Anna Maria

(56) Entgegenhaltungen:
- EP-A- 0 419 082
- EP-A- 1 219 476
- EP-A- 1 624 278
- DE-A1- 3 916 176
- DE-A1- 10 122 542
- DE-A1- 19 510 032
- DE-A1-102006 056 762
- DE-B3-102006 003 068
- JP-A- 60 094 810
- JP-A- 2005 188 613
- US-A- 5 028 073
- US-A- 5 491 633

## Beschreibung

Die Erfindung betrifft ein Kraftfahrzeug mit aktiver Federung. Abgefedert wird die Karosserie gegenüber zumindest einem Rad oder zumindest einer Achse. "Aktiv" bedeutet, dass bei der Federung ein Aktor das Niveau der Karosserie bezüglich des zumindest einen Rads oder der zumindest einen Achse festlegt. Typischerweise wird hierzu ein Motor bereitgestellt. Der Motor ist einerseits mit der Karosserie gekoppelt und wirkt andererseits auf ein Verstellelement ein. Das Verstellelement wechselwirkt zumindest indirekt mit dem zumindest einen Rad oder der zumindest einen Achse. Typischerweise ist das Verstellelement ein Federteller, an dem sich eine Feder abstützt, die andererseits an dem Rad oder der Achse abgestützt ist. Der Motor wirkt über eine Spindel auf das Verstellelement ein.

Bei der aktiven Federung erfolgt üblicherweise eine Regelung. Es muss daher der Höhenstand der Karosserie durch einen Zahlenwert ausdrückbar sein. Der Zahlenwert kann beispielsweise den Abstand zwischen dem Verstellelement einerseits und einem karosseriefesten Element andererseits wiedergeben.

Eine derartige Höhenverstellvorrichtung für Radaufhängungen von Kraftfahrzeugen ist aus der DE-A-10 2006 056 762 (EP-A-1 927 486) bekannt. An einen Elektromotor ist ein Winkelcodierer angebaut, mittels dem die jeweilige Drehwinkellage eines Stellringes erfassbar und in einem elektronischen Steuergerät entsprechend auswertbar ist. Durch entsprechende Ansteuerung des Elektromotors kann somit der Stellring über ein Schneckengetriebe in beiden Drehrichtungen in definierte Drehwinkellagen relativ zum Federteller verstellt werden.

Bei Verwendung einer Spindel, über die der Motor auf das Verstellelement einwirkt, kann der Drehwinkel der Spindel bzw. der Motorwelle, die dann das Messobjekt ist, gemessen werden. Durch ein Mittel zum Zählen wird erfasst, wie viele Umdrehungen das Messobjekt gemacht hat. Da die Elektronik ausfallen kann, steht nach einem solchen Ausfallen der Elektronik eine entsprechende Information nicht mehr zur Verfügung. Die Information über die Zahl der Umdrehungen ist verloren und gegebenenfalls auch die über den Winkel, wenn eine Bezugsgröße nicht mehr bekannt ist.

In Kraftfahrzeugen der genannten Gattung ist es bekannt, auch anders als durch Winkelmessung an der Motorwelle bzw. der Spindel und Zählung der Umdrehungen den Abstand zwischen dem Verstellelement und einem karosseriefesten Element zu ermitteln:
So sind aus der EP 1 295 737 B1 und der EP 1 526 014 B1 Luftfedern für Kraftfahrzeuge bekannt, bei denen entsprechende Abstände mit Hilfe von Ultraschall ermittelt werden. Aus der DE 10 2005 008 403 A1 und der DE 10 2006 025 326 A1 ist bekannt, anstelle von Ultraschall Radar zur Bestimmung der Federhöhe einer Luftfeder (bzw. des einen Federwegs) einzusetzen. Gemessen wird hierbei eine Impulslaufzeit.

Die EP 1 335 840 B1 beschreibt ein optisches Messverfahren im Zusammenhang mit einer Höhenmessung in einem Niveauregelsystem. Hierbei ist die Lichtquelle mit einem beweglichen Element des Niveauregelsystems gekoppelt. Derartiges kann sich aus konstruktiven Gründen als nachteilig erweisen.

Die EP 0 551 986 B1 beschreibt eine Luftfeder mit einem Abstandsfühler, bei dem zwei Lichtemitter verwendet werden und eine Differenz in der Länge der Bahnen der von den Lichtemittern ausgesandten Lichtstrahl als Maß für einen Höhenabstand eingesetzt wird. Die Verwendung zweier Lichtemitter geht mit erheblichem Aufwand einher. Da zur Messung von Signalen bei dem System aus der EP 0 551 986 B1 Reflexionen nötig sind, muss zudem bei einem bestimmten Bauteil dafür gesorgt sein, dass Reflexion gefördert wird.

Aus der EP-A-1 624 278 ist eine Messeinrichtung bekannt, die nach einem optischen Messprinzip arbeitet, und die zur Abstands-Bestimmung in einer Kraftfahrzeug-Luftfeder montiert ist. Die Luftfeder weist einen Rollblag auf, an dessen einer Stirnseite eine Abdeckung und an der anderen Stirnseite ein Abrollkolben angeordnet ist. Die Messeinrichtung weist einen Sender, einen Reflektor und ein Empfänger auf. Des weiteren weist die Messeinrichtung noch eine Auswerteeinheit auf, in der die durch den Empfänger empfangenen Lichtsignale ausgewertet werden, um den zu berechnenden Abstand zu ermitteln. Der Sender, der Empfänger und die Auswerteeinheit sind an der Abdeckung angeordnet. Der Reflektor ist an dem Abrollkolben angeordnet. Nach einem alternativen Messverfahren (Triangulationsverfahren) wird ein Lichtsignal durch den Sender ausgesendet, durch den Reflektor reflektiert und das Lichtsignal durch einen Positionsempfindlichen Empfänger (z.B. Mehrelement-Dioden oder CCD-Sensoren) aufgenommen. Aufgrund der geometrischen Verhältnisse erfolgt die Aufnahme des Lichtsignals an einer bestimmten Position des Empfängers. Verschiebt sich die Position des Reflektors, so ändert sich die Winkelverhältnisse unter denen das Lichtsignal reflektiert wird. Dadurch wird das Lichtsignal an einer anderen Position auf dem Empfänger empfangen. Die Änderung der Position des Lichtsignals auf dem Empfänger stellt somit ein Maß für den Abstand dar. Die optische Messeinrichtung ist unempfindlich gegenüber elektromagnetischer Störstrahlung. Durch das Fehlen beweglicher mechanischer Teile ist die Messeinrichtung robust. Des weiteren weist die Messeinrichtung eine geringe Teileanzahl auf und kann einfach in Kraftfahrzeugteile montiert werden.

Die DE-A-101 22 542 beschreibt eine Vorrichtung zur Regelung von Bewegungen des Aufbaus von Kraftfahrzeugen, wobei der Aufbau über eine Serienschaltung aus einem Stellglied und einer Tragfeder an zumindest einer Radachse abgestützt ist, wobei das Stellglied mit einem Elektromotor versehen ist, dessen Polwicklungen gegenüber dem Aufbau befestigt sind und dessen Rotor eine Gewindespindel antreibt, durch deren der Drehung der Abstand einer Gewindeschraube zum Aufbau veränderbar ist und wobei die Tragfeder mit ihrem der Radachseabgewandten Ende an der Gewindeschraube abgestützt ist. Es ist ein erster Sensor vorgesehen, der die aktuelle Länge des Federbeins beziehungsweise dessen Einfederweg erfasst. Es kann auch ein zweiter Sensor vorgesehen werden, der den Verfahrweg des Aktuators erfasst. Der zweite Sensor kann durch Mittel gebildet werden, die die Drehung des Antriebsmotors erfassen.

Die DE 195 10 032 A1 beschreibt einen Federträger innerhalb eines Fahrzeugfahrwerks zur Abstützung einer zwischen zwei Federtellern verspannten Schraubenfeder. Er umfasst mindestens einen axial verstellbaren Federteller sowie Befestigungen am Fahrzeugfahrwerk und am Fahrzeugaufbau, wobei der Federteller mittels einer Antriebseinheit axial positioniert wird. Es kann ein Sensor vorgesehen sein, der auf einem Gehäuse einer Antriebseinheit angeordnet ist und als Induktivsensor eine Wegbestimmung vornimmt.

Aus der EP 1 219 476 A1 ist ein Stoßdämpfer mit einem Zylinder und einer Kolbenstange bekannt. Die Drehbewegung eines Elektromotors kann in eine lineare Bewegung der Kolbenstange umgewandelt werden, so dass sich die Fahrzeughöhe einstellen lässt. Unter dem Motor ist ein Sensor angebracht, um die Rotationsgeschwindigkeit und Drehrichtung des Motors zu messen.

Die DE 10 2006 003 068 B3 beschreibt ein Verfahren zur Regelung des Fahrzeugaufbauniveaus bei Kraftfahrzeugen mithilfe eines elektromechanisch verstellbaren Federbeins. Hierbei werden Messgrößen für den Motorstrom und den Motorwinkel des Elektromotors bestimmt, welche für die Regelung des Aufbauniveaus ausreichen. Auf Wegsensoren wird vollständig verzichtet.

Aus der US 5,491,633 ist eine Vorrichtung bekannt, mit der sich der Abstand zwischen einer Karosserie und einem Rad eines Fahrzeug bestimmen lässt. Hierbei werden Signalpulse gezählt, die von einem magnetisch arbeitenden Detektor erfasst werden, so dass sich die Umdrehungen einer Spindel bestimmen lassen.

Es ist Aufgabe der vorliegenden Erfindung, möglichst unaufwendige Mittel zur Messung der eingestellten Aktorposition bereitzustellen, die insbesondere möglichst wenig eine Anpassung in der Konstruktion der Elemente der aktiven Federung an das Messverfahren notwendig machen bzw. umgekehrt möglichst viele Freiheiten bei der Gestaltung der Bauelemente der aktiven Federung lassen.

Die Aufgabe wird durch ein Kraftfahrzeug mit den Merkmalen gemäß Patentanspruch 1 sowie ein Verfahren mit den Schritten gemäß Patentanspruch 3 gelöst.

Erfindungsgemäß ist an der Karosserie eine so genannte Triangulationssensoreinheit angeordnet. Eine solche Sensoreinheit weist auf:
- eine Lichtquelle zum Bestrahlen des Verstellelements unter einem vorbestimmten oder festlegbaren Einstrahlwinkel mit einem Lichtstrahl,
- in definiertem Abstand zur Lichtquelle angeordnete Erfassungsmittel zum Erfassen eines Rückstrahlwinkels von einem Auftreffort des Lichtstrahls auf dem Verstellelement zu den Erfassungsmitteln,
- Mittel zum Ermitteln des Abstands zwischen Sensoreinheit und Verstellelement aus dem Einstrahlwinkel, dem Rückstrahlwinkel und dem definierten Abstand.

Das Prinzip der Triangulation ist als solches bekannt, vergleiche z. B. Wikipedia, die freie Enzyklopädie zum Stichwort "Triangulation (Messtechnik)" in der am 04.06.2008 geltenden Fassung oder auch den Artikel "Abstandsmessung, (optisch)" aus Wikipedia unter Punkt 3 "Lasertriangulation" in der am 04.06.2008 geltenden Fassung. Triangulationssensoren sind als solche auf dem Markt erhältlich, z. B. von der Firma Micro-Epsilon.

Dadurch, dass eine Triangulationssensoreinheit verwendet wird, die an der Karosserie angeordnet ist, müssen an dem Verstellelement keine Elemente zur Abstandsmessung bereitgestellt sein. Das Verstellelement muss lediglich genügend Platz zur Verfügung stellen, dass der Lichtstrahl auf dem Verstellelement auftreffen kann. Dieses Erfordernis ist leicht zu erfüllen. Die Triangulationssensoreinheit ist typischerweise sehr kompakt und nimmt daher wenig Platz in Anspruch, wiegt nicht viel und ist kostengünstig.

Die von der Triangulationssensoreinheit gewonnenen Informationen über den Abstand werden von einer Steuereinheit ausgewertet, die den Motor ansteuert. Hierzu sind die Mittel zum Ermitteln mit einer solchen Steuereinheit zu koppeln. Die Steuereinheit kann dann in Abhängigkeit von dem ermittelten Abstand Steuerbefehle an den Motor abgeben. Insbesondere wird eine Regelung des Abstands und damit eine Niveauregelung im Rahmen der aktiven Federung ermöglicht.

Der Motor wirkt über eine Spindel auf das Verstellelement ein.

Die Abstandsmessung mit Hilfeder Triangulationssensoreinheit erganzt Mittel zum Messen eines Winkels an der Spindel oder an der Motorwelle als Messobjekt und Mittel zum Zählen einer Zahl von Umdrehungen des Messobjekts, die im Stand der Technik im Zusammenhang mit aktiven Federungssystemen bekanntermaßen eingesetzt werden. Diese Mittel zum Messen und zum Zählen sind ebenfalls mit der Steuereinheit gekoppelt. Im Regelfall, z. B. wenn das System insgesamt fehlerfrei funktioniert, kann mit Hilfe dieser Mittel ein Wert für den Abstand zwischen der Sensoreinheit und dem Verstellelement abgeleitet werden, wobei ein Wert für einen mit diesem Abstand in Zusammenhang stehenden Abstand gleichzeitig als Wert für ersteren anzusehen ist, und dieser Abstandswert kann dann im Rahmen einer Regelung genutzt werden. In einem durch vorbestimmte Kriterien festgelegten Ausnahmefall, z. B. nach einem Ausfall der Elektronik und Verlust der in den Mitteln zum Messen und den Mitteln zum Zählen gespeicherten Informationen, kann dann der von der Sensoreinheit bereitgestellte Wert genutzt werden.

Die Erfindung findet bevorzugte Anwendung in dem Fall, dass das Verstellelement ein Federteller ist, der als Abstützung für eine Feder dient, die andererseits an einem Rad oder einer Achse abgestützt ist.

Das Verfahren zum Messen der Relativstellung zwischen einer Karosserie eines Kraftfahrzeugs und einem Verstellelement, das den Abstand zwischen Karosserie und Rad zumindest indirekt beeinflusst, wobei die Relativstellung durch Einwirken eines Motors auf ein Verstellelement festgelegt wird, umfasst die folgenden Schritte:
a) Messen der Relativstellung zwischen der Karosserie (16) des Kraftfahrzeugs und dem Verstellelement, das den Abstand zwischen Karosserie und Rad des Kraftfahrzeugs zumindest indirekt beeinflusst, wobei die Relativstellung durch Einwirken des Motors (20) auf das Verstellelement (18) festgelegt wird,
   mit den Schritten:
   - Bestrahlen des Verstellelements mit einem Lichtstrahl unter bekanntem Einstrahlwinkel mittels einer Lichtquelle, so dass der Lichtstrahl auf einem Auftreffort (zumindest näherungsweise punktförmig) auf dem Verstellelement auftrifft,
   - Erfassen, unter welchem Rückstrahlwinkel Licht von dem Auftreffort zu in definiertem Abstand zur Lichtquelle angeordneten Erfassungsmitteln gelangt,
   - Ableiten der Stellung des Verstellelements aus dem Einstrahlwinkel, dem Rückstrahlwinkel und dem definierten Abstand.
b) Messen eines Winkels an der Spindel (22) oder einer Motorwelle als Messobjekt;
c) Zählen einer Zahl von Umdrehungen des Messobjekts;
d) Ableiten eines Werts für die Relativstellung des Verstellelements (18) aus dem gemessenen Winkel und der gezählten Zahl durch eine Steuereinheit (24);
e) Festlegen von Steuerbefehlen an den Motor (20) durch die Steuereinheit (24), wobei bei dem Festlegen der Steuerbefehle in einem durch vorbestimmte Kriterien festgelegten Regelfall der unter d) abgeleitete Wert für die Relativstellung des Verstellelements (18) genutzt wird und in einem durch vorbestimmte Kriterien festgelegten Ausnahmefall die unter a) abgeleitete Stellung des Verstellelements (18) genutzt wird;
f) Abgeben der festgelegten Steuerbefehle von der Steuereinheit (24) an den Motor (20); und
g) Einwirken des Motors (20) über die Spindel (22) auf das Verstellelement (18) in Abhängigkeit der Steuerbefehle.

Das Verfahren entspricht der Nutzung der Sensoreinheit beim Kraftfahrzeug gemäß Patentanspruch 1.

Das Messverfahren hat den Vorteil, dass es zuverlässig arbeitet und wenig fehleranfällig ist. Es ist durch eine Sensoreinheit durchführbar, die kompakt und leicht ist und daher gut in einem aktiven Federungssystem unterbringbar ist.

Das erfindungsgemäße Verfahren zum Regeln der Relativstellung zwischen einer Karosserie eines Kraftfahrzeugs und einem Verstellelement, das den Abstand zwischen Karosserie und Rad zumindest indirekt beeinflusst, wobei die Relativstellung durch Einwirken eines Motors auf das Verstellelement festgelegt wird, macht Gebrauch von dem erfindungsgemäßen Verfahren zum Messen der Relativstellung, wobei Steuerbefehle an den Motor zumindest teilweise in Abhängigkeit von der im Rahmen dieses Verfahrens zum Messen der Relativstellung abgeleiteten Stellung des Verstellelements festgelegt werden. Das erfindungsgemäße Regelverfahren hat den Vorteil, dass durch die optische Messung jederzeit eine zuverlässige Information über die zu regelnde Größe (Abstand Verstellelement zu Karosserie) zur Verfügung steht, auch wenn zwischenzeitlich das System oder Systemkomponenten ausgefallen sein sollten.

Das erfindungsgemäße Regelverfahren hat das Einstellen der besagten Relativstellung zum Ziel. Die Steuerbefehle an den Motor legen zumindest die zu erreichende Relativstellung fest. Aufgrund der Information über die Relativstellung ist jedoch auch die so genannte Rotorlage bei einem bürstenlosen Gleichstrommotor ableitbar. Die entsprechende Beaufschlagung der Wicklungen des Motors mit Strom im Rahmen der so genannten Kommutierung kann dann ebenfalls in Abhängigkeit von der im Rahmen des Verfahrens zum Messen der Relativstellung abgeleiteten Stellung erfolgen, so dass auch Steuerbefehle auf dieser niedrigeren Ebene, die das rein elektromechanische Betreiben des Motors betreffen, gleichzeitig mit den Steuerbefehlen zum Festlegen der zu erreichenden Relativstellung in Abhängigkeit von der abgeleiteten Stellung des Verstellelements festgelegt werden können.

Nachfolgend wird eine bevorzugte Ausführungsform der Erfindung unter Bezug auf die Zeichnung beschrieben, in der
- Fig. 1: schematisch die zur Beschreibung der Erfindung wesentlichen Bauteile eines Kraftfahrzeugs mit aktiver Federung, insbesondere des Systems zur aktiven Federung, zeigt und
- Fig. 2: schematisch anhand des Aufbaus eines Triangulationssensors mit einem zugehörigen Messobjekt das Messprinzip der Triangulation veranschaulicht.

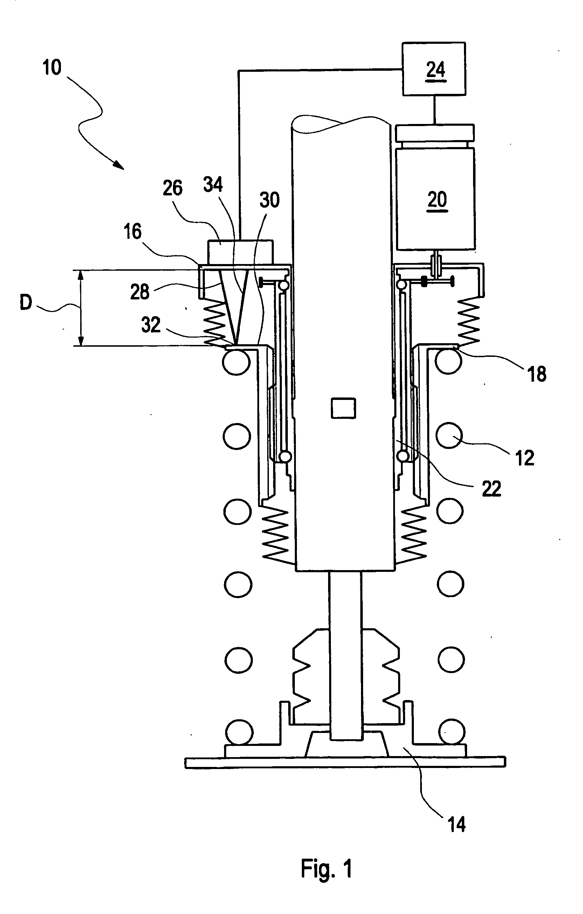

Ein in wesentlichen Teilen in Fig. 1 gezeigtes und dort im Ganzen mit 10 bezeichnetes System zum Bereitstellen einer aktiven Federung für ein Kraftfahrzeug umfasst zur Federung eine Feder 12. Diese ist an einem Element 14 abgestützt, gegenüber dem eine Abfederung der Fahrzeugkarosserie, von der ein Abschnitt 16 dargestellt ist, erfolgen soll. Das Element 14 kann ein beweglicher Teil der Achse, z.B. ein Lenker oder ein Radträger sein. Die Feder 12 ist an einem Federteller 18 abgestützt. Die aktive Federung impliziert, dass der Federteller 18 gegenüber der Karosserie 16 in eine vorbestimmte Stellung verbracht wird. Hierzu dient ein Elektromotor 20, der den Federteller 18 über eine Gewindespindel 22 verstellt. Der Elektromotor 20 wird von einer Steuereinrichtung 24 angesteuert. Deren Aufgabe ist es, den Abstand zwischen der Karosserie 16 und dem Federteller 18 in definierter Weise einzustellen. Hierzu wird der Abstand mit Hilfe einer Triangulationssensoreinheit 26 vermessen. Diese sendet einen Lichtstrahl 28 unter vorbestimmtem Einstrahlwinkel auf den Federteller 18 an dessen eben ausgebildeter, der Feder 12 abgewandten Seite 30, so dass der Lichtstrahl an einem Punkt 32 auftrifft. Als Streulicht gelangt ein Lichtstrahl 34 unter vorbestimmtem Rückstrahlwinkel zur Sensoreinheit 26 zurück. Es handelt sich beim Rückstrahlwinkel nicht um den Ausfallwinkel bei einer Reflexion von Licht. Es wird der Abstand zwischen dem Aussendeort für den Lichtstrahl 28 und dem Empfangsort für den Lichtstrahl 34 verwendet, um aus dem Einstrahlwinkel und dem Rückstrahlwinkel auf den Abstand D zwischen der Karosserie 16 und dem Federteller 18 zurückzuschließen.

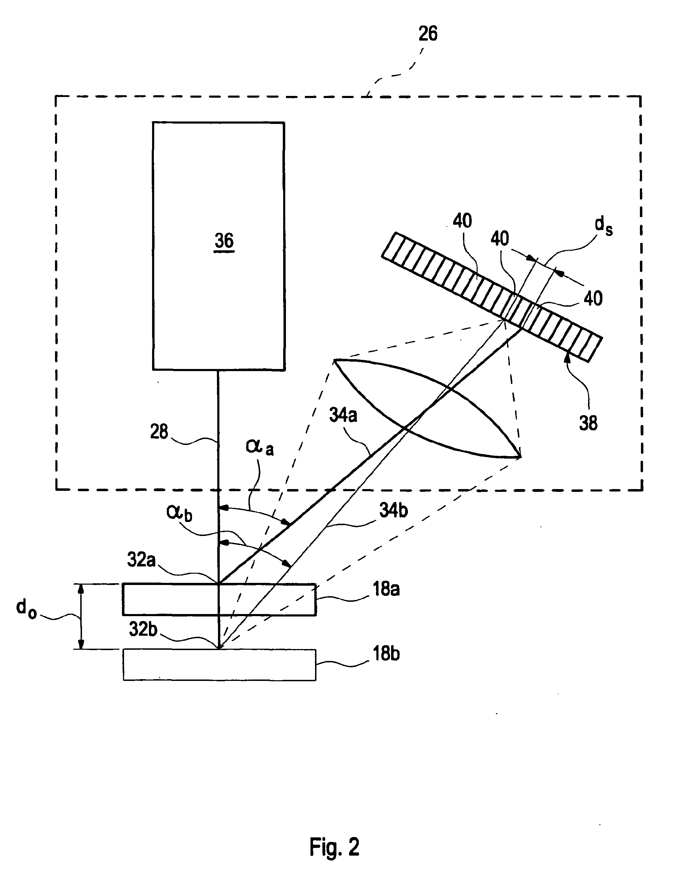

Ein Triangulationssensor funktioniert wie folgt: Eine Lichtquelle 36 sendet den Lichtstrahl 28 aus. Dieser Lichtstrahl 28 trifft auf einem Punkt 32a auf dem Federteller 18a auf bzw. bei einer anderen Stellung des Federtellers auf einem Punkt 32b auf dem Federteller 18b auf. Teil der Triangulationssensoreinheit 26 ist nun eine Kamera, eine ortsauflösende Fotodiode oder eine CCD-Zeile, oder auch ein PSD-Sensor. Dieses Element ist in Fig. 2 mit 38 bezeichnet. Kennzeichen eines solchen Elements 38 ist es, dass ein Auftreffort für den Lichtstrahl 34a, der vom Punkt 32a zum Element 38 gelangt bzw. für den Lichtstrahl 34b, der vom Auftreffort 32b zum Element 38 gelangt, ermittelbar ist. Aus diesem Auftreffort kann auf den Rückstrahlwinkel αₐ bzw. α_{b} zurückgeschlossen werden. Eine Änderung im Abstand des Federtellers 18 von der Stellung gemäß dem Federteller 18a zur Stellung gemäß dem Federteller 18b um eine Strecke d₀ schlägt sich wieder in einem um den Abstand dₛ beim Element 38 beabstandeten Auftreffpunkt. Da der Abstand zwischen der Lichtquelle 36 und dem Element 38 andererseits bekannt ist, kann durch Verwendung der Dreiecksgleichungen aus dₛ auf den Abstand d₀ zurückgeschlossen werden, und damit letztlich auf den Abstand D (Fig. 1). Da lediglich die Dreiecksgleichungen verwendet werden, nennt sich das Prinzip "Triangulation". Die Lichtquelle 36 gibt hierbei Infrarotlicht, sichtbares Licht oder Ultraviolettlicht ab. Bevorzugt handelt es sich um eine Laserlichtquelle. Das Element 38 ist bevorzugt aus einer Vielzahl von sensitiven Elementen 40 zusammengesetzt.

Durch den Einsatz der Lasertriangulation im Zusammenhang mit einer aktiven Federung wird die Abstandsmessung zwischen Karosserie 16 und dem Federteller 18 als Verstellelement im Vergleich zu Ausführungsformen gemäß dem Stand der Technik erleichtert. Da die Triangulationssensoreinheit 26 der Steuereinrichtung 24 das Abstandssignal zuführt, kann eine präzise Regelung erfolgen.

Die Lasertriangulationssensoreinheit kann die herkömmlicherweise häufig verwendeten Winkelmesssysteme und einen gegebenenfalls zugehörigen Zähler für die Zahl von Umdrehungen, vorliegend der Spindel 22, ersetzen, so dass auf diese verzichtet werden kann, insbesondere auch bei Verwendung eines bürstenlosen Gleichstrommotors. Die Lagebestimmung kann bei der Kommutierung eines bürstenlosen Gleichstrommotors eingesetzt werden. Bürstenlose Gleichstrommaschinen besitzen gemäß dem Artikel "Gleichstrommaschine", Abschnitt 1.3.2 aus Wikipedia der freien Enzyklopädie in der Fassung vom 27.06.2008 Lagesensoren, die die Stellung des Rotors detektieren. Die Phasen werden in Abhängigkeit von der Lage des Rotors geschaltet, es erfolgt also die so genannte Kommutierung, das Definieren der Pole bzw. der Polrichtungen. Vorliegend kann auf solche Lagesensoren in dem bürstenlosen Gleichstrommotor verzichtet werden, denn die Lasertriangulationssensoreinheit gibt derart präzise Messsignale, dass aufgrund der Position des Federtellers 18 tatsächlich auf die Rotorlage des Rotors des bürstenlosen Gleichstrommotors rückgeschlossen werden kann. Die oben genannte präzise Regelung durch die Steuereinrichtung 24 betrifft das Einregeln der Stellung des Federtellers 18. Das Ableiten der Rotorlage und eine entsprechende Ansteuerung des bürstenlosen Gleichstrommotors in Abhängigkeit von der ermittelten Position des Federtellers 18 zeigt eine Nutzung der durch die Lasertriangulationssensoreinheit gewonnenen Information auf einer niedrigeren Steuerebene. Es ist mittels der Triangulationssensoreinheit 26 dann eine direkte Positionsbestimmung im System zur Bereitstellung eines Eingangssignals für das Steuergerät 24 möglich.

Der Triangulationssensor 26 kann alternativ auch neben das Winkelmesssystem und die Zähleinrichtung treten, so dass eine gegenseitige Verifikation der ermittelten Größen zum Abstand erfolgen kann.

Die Triangulationssensorieinheit 26 kann insbesondere dann wertvoll sein, wenn die von den Winkelmesssystemen und der Zelleinrichtung ermittelten Werte nach einem Systemausfall verloren gegangen sind. Dann kann die relative Position des Federtellers 18 völlig neu mit ausreichender Präzision ermittelt werden.

Ein optisches Messsystem wie vorliegend die Triangulationssensoreinheit 26 hat gegenüber mechanischen Längenmesssystemen den Vorteil, dass es besser in die Konstruktion integrierbar und robuster gegen typische Umwelteinflüsse im Fahrwerksbereich, wie z. B. Erschütterungen, ist.

## Patentansprüche

1. Kraftfahrzeug mit einer Karosserie (16) und zumindest einem Rad oder zumindest einer Achse mit einem beweglichen Achsteil (14), wobei zur Festlegung des Niveaus der Karosserie (16) bezüglich des zumindest einen Rads oder der zumindest einen Achse ein Motor (20) bereitgestellt ist, der mit der Karosserie (16) gekoppelt ist und auf ein Verstellelement (18) einwirkt,
wobei
an der Karosserie (16) eine Sensoreinheit (26) angeordnet ist, die aufweist:
- eine Lichtquelle (36) zum Bestrahlen des Verstellelements (18) unter einem vorbestimmten oder festlegbaren Einstrahlwinkel mit einem Lichtstrahl (28),
- in definiertem Abstand zur Lichtquelle (36) angeordnete Erfassungsmittel (38) zum Erfassen eines Rückstrahlwinkels (αₐ, α_{b}) von einem Auftreffort (32a, 32b) des Lichtstrahls (28) auf dem Verstellelement (18a, 18b) zu den Erfassungsmitteln (38),
- Mittel zum Ermitteln des Abstands zwischen Sensoreinheit (26) und Verstellelement (18) aus dem Einstrahlwinkel, dem Rückstrahlwinkel und dem definierten Abstand, wobei die Mittel zum Ermitteln mit einer Steuereinheit (24) zum Ansteuern des Motors (20) gekoppelt sind, damit die Steuereinheit (24) in Abhängigkeit von dem ermittelten Abstand Steuerbefehle an den Motor (20) abzugeben in der Lage ist und der Motor (20) über eine Spindel (22) auf das Verstellelement (18) einwirkt und bei dem Mittel zum Messen eines Winkels an der Spindel oder einer Motorwelle als Messobjekt und Mittel zum Zählen einer Zahl von Umdrehungen des Messobjekts bereitgestellt sind, wobei die Steuereinheit auch mit den Mitteln zum Messen des Winkels und den Mitteln zum Zählen gekoppelt ist und einen Wert für den Abstand zwischen der Sensoreinheit und dem Verstellelement abzuleiten ausgelegt ist und ferner dazu ausgelegt ist, zur Festlegung von Steuerbefehlen in einem durch vorbestimmte Kriterien festgelegten Regelfall diesen abgeleiteten Wert zu nutzen und in einem durch vorbestimmte Kriterien festgelegten Ausnahmefall einen von der Sensoreinheit bereitgestellten Wert zu nutzen.

2. Kraftfahrzeug nach Anspruch 1, bei dem das Verstellelement ein Federteller (18) ist, der als Abstützung für eine Feder (12) dient, die andererseits an einem beweglichen Achsteil (14) abgestützt ist.

3. Verfahren zum Regeln der Relativstellung zwischen einer Karosserie (16) eines Kraftfahrzeugs und einem Verstellelement, das den Abstand zwischen Karosserie und Rad des Kraftfahrzeugs zumindest indirekt beeinflusst, wobei die Relativstellung durch Einwirken eines Motors (20) über eine Spindel (22) auf das Verstellelement (18) festgelegt wird, mit den Schritten:
a) Messen der Relativstellung zwischen der Karosserie (16) des Kraftfahrzeugs und dem Verstellelement, das den Abstand zwischen Karosserie und Rad des Kraftfahrzeugs zumindest indirekt beeinflusst, wobei die Relativstellung durch Einwirken des Motors (20) auf das Verstellelement (18) festgelegt wird,
mit den Schritten:
- Bestrahlen des Verstellelements (18) mit einem Lichtstrahl (28) unter bekanntem Einstrahlwinkel mittels einer Lichtquelle (36), so dass der Lichtstrahl (28) auf einem Auftreffort (32a, 32b) auf dem Verstellelement (18a, 18b) auftrifft,
- Erfassen, unter welchem Rückstrahlwinkel (αₐ, α_{b}) Licht von dem Auftreffort (32a, 32b) zu in definiertem Abstand zur Lichtquelle (36) angeordneten Erfassungsmitteln (38) gelangt,
- Ableiten der Stellung des Verstellelements (18) aus dem Einstrahlwinkel, dem Rückstrahlwinkel und dem definierten Abstand.
b) Messen eines Winkels an der Spindel (22) oder einer Motorwelle als Messobjekt;
c) Zählen einer Zahl von Umdrehungen des Messobjekts;
d) Ableiten eines Werts für die Relativstellung des Verstellelements (18) aus dem gemessenen Winkel und der gezählten Zahl durch eine Steuereinheit (24);
e) Festlegen von Steuerbefehlen an den Motor (20) durch die Steuereinheit (24), wobei bei dem Festlegen der Steuerbefehle in einem durch vorbestimmte Kriterien festgelegten Regelfall der unter d) abgeleitete Wert für die Relativstellung des Verstellelements (18) genutzt wird und in einem durch vorbestimmte Kriterien festgelegten Ausnahmefall die unter a) abgeleitete Stellung des Verstellelements (18) genutzt wird;
f) Abgeben der festgelegten Steuerbefehle von der Steuereinheit (24) an den Motor (20);
g) Einwirken des Motors (20) über die Spindel (22) auf das Verstellelement (18) in Abhängigkeit der Steuerbefehle.

## Claims

1. A motor vehicle with a body (16) and at least one wheel or at least one axle with a movable axle part (14), wherein a motor (20), which is coupled to the body (16) and acts upon an adjustment element (18), is provided in order to set the level of the body (16) with respect to the at least one wheel or the at least one axle, wherein the body (16) has arranged on it a sensor unit (26) which has
- a light source (36) for irradiating the adjustment element (18) with a light beam (28) at an angle of incidence which is pre-determined or capable of being set,
- detection means (38) arranged at a defined distance from the light source (36) for detecting a reflection angle (αₐ, α_{b}) from an impact location (32a, 32b) of the light beam (28) on the adjustment element (18a, 18b) to the detection means (38),
- means for determination of the distance between the sensor unit (26) and the adjustment element (18) from the angle of incidence, the reflection angle and the defined distance, wherein the means for determination are coupled to a control unit (24) for actuating the motor (20), so that the control unit (24) is capable of delivering control commands to the motor (20) in a manner dependent upon the distance determined, and the motor (20) acts upon the adjustment element (18) by way of a spindle (22) and in which means are provided for measuring an angle on the spindle or a motor shaft as a measurement item and means for counting a number of revolutions of the measurement item, wherein the control unit is also coupled to the means for measuring the angle and the means for counting and is designed for deriving a value of the distance between the sensor unit and the adjustment element and is further designed for using this derived value in order to set control commands in a normal case set by pre-determined criteria and for using a value provided by the sensor unit in an exceptional case set by pre-determined criteria.

2. A motor vehicle according to claim 1, in which the adjustment element is a spring plate (18) which serves as a support for a spring (12) which is supported on a movable axle part (14) on the other side.

3. A method of regulating the relative position between a body (16) of a motor vehicle and an adjustment element which influences the distance between the body and the wheel of the motor vehicle at least indirectly, wherein the relative position is set by the action of a motor (20) upon the adjustment element (18) by way of a spindle (22), with the steps:
a) measuring the relative position between the body (16) of the motor vehicle and the adjustment element which influences the distance between the body and the wheel of the motor vehicle at least indirectly, wherein the relative position is set by the action of the motor (20) upon the adjustment element (18), with the steps:
- irradiating the adjustment element (18) with a light beam (28) at a known angle of incidence by means of a light source (36) so that the light beam (28) strikes an impact location (32a, 32b) on the adjustment element (18a, 18b),
- detecting at what reflection angle (αₐ, α_{b}) light from the impact location (32a, 32b) reaches detection means (38) arranged at a defined distance from the light source (36),
- deriving the position of the adjustment element (18) from the angle of incidence, the reflection angle and the defined distance,
b) measuring an angle on the spindle (22) or a motor shaft as a measurement item;
c) counting a number of revolutions of the measurement item;
d) deriving a value for the relative position of the adjustment element (18) from the measured angle and the counted number by a control unit (24);
e) setting control commands on the motor (20) by the control unit (24), wherein when the control commands are set in a normal case set by pre-determined criteria use is made of the value derived under d) for the relative position of the adjustment element (18) and in an exceptional case set by pre-determined criteria use is made of the setting of the adjustment element (18) derived under a);
f) delivering the set control commands from the control unit (24) to the motor (20), and
g) acting upon the adjustment element (18) by the motor (20) by way of the spindle (22) in a manner dependent upon the control commands.

## Revendications

1. Véhicule automobile avec une carrosserie (16) et avec au moins une roue ou au moins un essieu muni d'une partie d'essieu (14) mobile, un moteur (20) qui est couplé à la carrosserie (16) et qui agit sur un élément de déplacement (18) étant prévu pour fixer le niveau de la carrosserie (16) par rapport à l'au moins une roue ou à l'au moins un essieu,
une unité de capteur (26) étant agencée sur la carrosserie (16), laquelle unité de capteur comporte :
- une source de lumière (36) pour exposer l'élément de déplacement (18) à un rayon lumineux (28) suivant un angle d'incidence prédéterminé ou pouvant être fixé,
- des moyens de détection (38) agencés à une distance définie de la source de lumière (36) et destinés à détecter un angle de rayon réfléchi (aₐ, a_{b}) qui revient d'un point d'incidence (32a, 32b) du rayon lumineux (28) sur l'élément de déplacement (18a, 18b) aux moyens de détection (38),
- des moyens pour déterminer la distance entre l'unité de capteur (26) et l'élément de déplacement (18) à partir de l'angle d'incidence, de l'angle de rayon réfléchi et de la distance définie, ces moyens de détermination étant couplés à une unité de commande (24) pour commander le moteur (20) afin que l'unité de commande (24) soit capable de fournir des instructions de commande au moteur (20) en fonction de la distance déterminée et que le moteur (20) agisse sur l'élément de déplacement (18) par l'intermédiaire d'un axe (22), des moyens pour mesurer un angle sur l'axe ou sur un arbre de moteur comme objet de mesure et des moyens pour compter un nombre de tours de l'objet de mesure étant prévus, l'unité de commande étant aussi couplée aux moyens pour mesurer l'angle et aux moyens pour compter le nombre de tours et étant conçue pour déduire une valeur correspondant à la distance entre l'unité de capteur et l'élément de déplacement ainsi que pour utiliser cette valeur déduite afin de spécifier des instructions de commande dans un cas normal défini par des critères prédéterminés et pour utiliser une valeur fournie par l'unité de capteur dans un cas exceptionnel défini par des critères prédéterminés.

2. Véhicule automobile selon la revendication 1, dans lequel l'élément de déplacement est une coupelle de ressort (18) qui sert à soutenir un ressort (12) qui est soutenu d'autre part par une partie d'essieu (14) mobile.

3. Procédé de réglage de la position relative entre une carrosserie (16) d'un véhicule automobile et un élément de déplacement qui influence au moins indirectement la distance entre la carrosserie et la roue du véhicule automobile, la position relative étant fixée par l'action d'un moteur (20) sur l'élément de déplacement (18) par l'intermédiaire d'un axe (22), avec les étapes suivantes :
a) mesure de la position relative entre la carrosserie (16) du véhicule automobile et l'élément de déplacement qui influence au moins indirectement la distance entre la carrosserie et la roue du véhicule automobile, la position relative étant fixée par l'action du moteur (20) sur l'élément de déplacement (18),
avec les étapes :
- exposer l'élément de déplacement (18) à un rayon lumineux (28) suivant un angle d'incidence connu au moyen d'une source de lumière (36) de telle sorte que le rayon lumineux (28) arrive en un point d'incidence (32a, 32b) sur l'élément de déplacement (18a, 18b),
- détecter sous quel angle de rayon réfléchi (aₐ, a_{b}) une lumière arrive du point d'incidence (32a, 32b) à des moyens de détection (38) agencés à une distance définie de la source de lumière (36),
- déduire la position de l'élément de déplacement (18) à partir de l'angle d'incidence, de l'angle de rayon réfléchi et de la distance définie ;
b) mesure d'un angle sur l'axe (22) ou sur un arbre de moteur comme objet de mesure ;
c) comptage d'un nombre de tours de l'objet de mesure ;
d) déduction, par une unité de commande (24), d'une valeur correspondant à la position relative de l'élément de déplacement (18) à partir de l'angle mesuré et du nombre compté ;
e) spécification, par l'unité de commande (24), des instructions de commande destinées au moteur (20), la valeur déduite en d) et correspondant à la position relative de l'élément de déplacement (18) étant utilisée lors de la spécification des instructions de commande dans un cas normal défini par des critères prédéterminés et la position déduite en a) de l'élément de déplacement (18) étant utilisée lors de la spécification des instructions de commande dans un cas exceptionnel défini par des critères prédéterminés ;
f) délivrance, par l'unité de commande (24), des instructions de commande spécifiées au moteur (20) ;
g) action du moteur (20) par l'intermédiaire de l'axe (22) sur l'élément de déplacement (18) en fonction des instructions de commande.
